Europäisches Patentamt

(19) European Patent Office

Office européen des brevets

(11) EP 0 689 834 A2

## (12) EUROPEAN PATENT APPLICATION

(43) Date of publication:
03.01.1996 Bulletin 1996/01

(21) Application number: 95110054.4

(22) Date of filing: 28.06.1995

(51) Int. Cl.[6]: **A61K 9/52**, A23L 1/302,
A23L 1/304, A61K 33/00,
A61K 31/07, A61K 31/51,
A61K 31/355, A61K 31/525,
A61K 31/68, A61K 31/59,
A61K 31/595, A61K 31/44,
A61K 31/415, A61K 31/375

(84) Designated Contracting States:
AT BE CH DE DK ES FR GB GR IE IT LI LU MC NL
PT SE

(30) Priority: 01.07.1994 ZA 9402930

(71) Applicant: Serfontein, Willem Jacob
Faerie Glen 0043, Pretoria (ZA)

(72) Inventor: Serfontein, Willem Jacob
Faerie Glen 0043, Pretoria (ZA)

(74) Representative: Flaccus, Rolf-Dieter, Dr.
D-50389 Wesseling (DE)

(54) **Sustained release food or feed supplement containing vitamins and minerals**

(57) A food or feed supplement comprising vitamin or vitamins and/or mineral or nutrient supplement substances, characterised in that it is presented granulated and/or microencapsulated with an organic polymer, or macromolecular natural or natural substance-derived binder, coating, encapsulating or carrier substance imparting delayed or gradual release properties to the preparation in respect of vitamins and/or mineral or nutrient supplement substances, the granulate being in a free-flowing form adapted for adding it to food or feed prior to ingestion, and in a particle size distribution sufficiently fine and/or of a character to provide an acceptable texture in the mouth when ingested together with food. The supplement is supplied in a dispenser similar to a salt or condiment shaker from which the supplement is sprinkled onto food or feed.

Printed by Rank Xerox (UK) Business Services
2.5/3.4

## Description

The present invention relates to food or feed supplements. More particularly, the invention relates to such supplements including a vitamin and/or mineral preparation.

The vitamin and mineral supplement market in the USA alone is worth in excess of 4 billion dollars annually. In many other western countries there is a similar growing market for supplements. Up until now, interest in vitamin and mineral supplementation has been largely confined to the health conscious public who also can afford the use of such supplements. In most countries the lower economic groups have been barred from using such supplements on a large scale, not only because of financial considerations, but as a result of lack of knowledge and appreciation of what such supplements can do for them. At present, this situation is rapidly changing, especially in developing third world countries in Africa and Asia. In these countries there is now a rapidly growing interest in health related matters by an emerging middle class who are increasingly becoming aware of such commodities as vitamin supplements and cosmetics. In many cases though, financial considerations are still a serious problem because of the relatively high cost and poor cost-effectiveness of these products.

The human and animal body has by evolution evolved mechanisms specifically designed to efficiently extract vitamins and essential mineral substances from the regular food intake. Unfortunately modern living conditions including dietary and other habits and even certain medicines are inclined to interfere with these mechanisms, thereby increasing the demand of the body for the ingestion and if necessary supplementation of these substances. In addition modern agricultural production methods as well as food preparation methods are inclined to reduce the available supplies of these substances in average diets, thus creating different levels of sub-clinical deficiencies which are difficult to recognise as such, but which may nonetheless have serious long-term consequences.

Most conventional vitamin and mineral supplements are supplied in dosage units, e.g. in tablet or capsule form. These are not only expensive and inconvenient but they also make available the supplement ingredients in a form departing radically from the form in which the body is designed and used to ingest these substances. This may greatly diminish the efficacy of conventional supplements as well as the body tolerance to these supplements. These products, presented mostly as tablets or capsules, are not ideal for the purposes which the present invention seeks to address because of tabletting and capsulating costs as well as the fact that these forms are not suitable for use in young children and in severely ill patients and also in animals. The very important role that other compounds, known and unknown, present in natural food or feed products play in conjunction with vitamin metabolism and utilisation, is often overlooked. Thus ascorbic acid, dissolved in a glass of orange juice, is a more efficient way of vitamin C supplementation than tablets.

Conventional manners of enriching foodstuffs with vitamins also suffer from the disadvantage that the vitamins are liable to become degraded during storage, by exposure to the atmosphere and during conventional cooking, baking or other food preparation process.

A simple powdered vitamin or mix of vitamins and minerals is also unsuitable because of stability problems (exposure to air) and especially and particularly the taste which such a powdered preparation has. Moreover such vitamins or vitamin and mineral mixtures impart an unpleasant taste to certain foods when added to them, for example when incorporated into soups, gravies etc., and generally as an addition in the preparation of a large variety of prepared foods.

There accordingly exists a need for a vitamin and mineral supplement which overcomes or mitigates the aforesaid disadvantages.

In particular, there is a need for compositions and methods for the mineral and vitamin supplementation of foodstuffs in a manner in which the natural ingestion of the supplement substances as part of the diet is **mimicked** as closely as possible, bioavailability thereof is enhanced and losses by degradation are minimised.

The present invention is inter alia based on the concept of supplementing the available supply of vitamins and/or mineral substances in the diet in a manner designed to maximise to a greater or lesser degree the natural availability thereof in foodstuffs. One of the methods used is to provide the vitamins and minerals in the presence of the appropriate natural products.

It is intended to improve the efficacy of the intake, thereby saving costs by allowing daily dosages to be minimised for a given effect. Also the proposed form of presentation is likely to be particularly cost effective as well as user friendly.

There is a demand for a process that will permit the manufacture of comparatively cheap vitamin and mineral supplements which will allow the more widespread use of such products. In particular such a product should be designed so that it can be readily used by the entire family at an affordable price.

The present invention provides a solution to or mitigates these problems by the preparation of a granulated vitamin/mineral/nutrient mixture containing optionally a variety of appropriate natural products which can be used for enrichment of food in a variety of ways.

Vitamin supplement ingredients in granulated form are conventionally not administered as such but are included in capsules for swallowing.

Applicant has surprisingly found that by granulating such a vitamin or vitamin/mineral/nutrient mixture in the presence of certain organic polymers (e.g. polyethylene glycol 6000) and/or certain natural substances such as gelatine, certain natural gums, malto-dextrins or soya proteins, granules can be prepared that have the following desirable characteristics:

- retarded rate of dissolution
- increased stability
- bland, neutral taste.

According to a first aspect to the present invention there is provided a food or feed supplement comprising vitamin or vitamins and/or mineral or nutrient supplement substances, which is presented granulated and/or micro encapsulated with an organic polymer, or macromolecular natural or natural substance-derived binder, coating, encapsulating or carrier substance imparting delayed or gradual release properties to the preparation in respect of vitamins and/or mineral nutrient or supplement substances, the granulate being in a free-flowing form adapted for adding it to food or feed prior to ingestion, and in a particle size distribution sufficiently fine and/or of a character to provide an acceptable texture in the mouth when ingested together with food. The granulate particles should have a sufficiently soft or yielding consistency, particularly if in the form of relatively large particles, so that an unpleasant "feel" between the teeth is avoided or minimised. The granulate may thus be ingested as such so that at least part of the supplement substances are released only at appropriate stages in the gastro-intestinal tract.

Natural or natural substance-derived macromolecular, preferably substantially unmodified natural substances are preferred, such as food gums, malto-dextrins, pre-gelatinised maize (corn), soya proteins or similar natural binder, coating or encapsulating substances are preferred. They offer the advantage of ready acceptability in food and feed products as well as potential ability to impart particular desired slow or delayed release properties in the granules.

More particularly the macromolecular natural or natural substance-derived binder, coating, encapsulating or carrier substance is selected from the group consisting of food gums, guar gum, gum arabic, acacia gum, malto-dextrins, starch, pre-gelatinised gelatine, gelatine derivatives, agar, agarose, agaropectin, casein, casein derivatives, natural substance derived hydro-colloid gels, fatty or waxy substances, lecithin, edible polysacharides and mixture of more than one of these.

Instructions for use may preferably be in written or graphic, e.g. printed form, e.g. applied to the outside of a package containing the granulate or as a package insert.

The supplement may contain in addition to a binder, coating or encapsulating substance, one or more food compatible natural substances selected from the group consisting of herbs and derivatives of herbs, natural foods, fractions of foods or food extracts, molasses, concentrated citrus or apple or other fruit bioflavonoids, brewer's yeast, kelp, rose hip powder, soya flour, soya isolates, alfalfa powder, dried tomato powder, wheat germ powder. When composed in this manner, the final product becomes essentially a natural food fortified by the addition of certain vitamins and minerals.

The invention includes in its scope food supplements for humans, but may be applied in analogous manner as a feed supplement for animals, in particular domestic animals, e.g. pets such as cats or dogs, but also horses and various farm animals.

The terms "granulated" and "granule" are intended to encompass granulates in the conventional sense comprising coated granules and/or granules containing the aforesaid polymers or macromolecular substances as part of their composition, the granules being of a potentially wide range of particle sizes, e.g. from a few microns to one or more millimetres in diameter, preferably from 2 microns to about 4 mm, more preferably about 10 microns to about 3mm, say from about 20 microns to about 2mm.

The preferred method of producing such granules is by means of the process of agglomeration including all the different mechanical variations thereof. The terms are intended to include however, also individual coated crystals or particles of the supplement substances as well as granules prepared by admixing polymers and/or natural products as described above with the ingredients. Thus where a plurality of active components are incorporated in a food supplement composition it is not essential (albeit sometimes preferred) that all ingredients are combined in one type of granule. It is also possible for different ingredients to be micro encapsulated (or otherwise formulated as herein described) separately in different granules or particles, and/or in different parts of granules.

In this manner, unstable ingredients (e.g. certain vitamins such as A, C, E) may be introduced separately into the final product.

Also, in this manner chemically incompatible substances may be kept separate. Also different supplement ingredients can be coated differently in order to achieve different release rates.

In particular, and as an example of many possible variations, a core granule consisting of vitamins and compatible mineral supplements (e.g. magnesium and calcium citrates) can be produced by means of agglomeration in the first step. Thereafter, these granules can be further coated with a solution of micro minerals (e.g. copper, manganese, zinc salts, etc.) Finally the product may be coated with a layer of slowly dissolving gum (e.g. guar gum) to afford a protective layer and to retard dissolution of the granules in the gut. There are many other obvious variations of such a procedure, one of which could be a multi-phased coating process by means of which unstable vitamins are incorporated first into the basic granules followed by layers of compatible and incompatible nutrients.

Preferably the polymers and/or natural products as herein described are slightly water soluble but only so much so that the granules will dissolve and release the vitamins and/or minerals or nutrients over a suitable period of time, preferably 0,25 to 6 hours, more preferably 0,5 to 4 hours, most preferably 0,5 to 1 hour. This can be elegantly achieved by coating a single or multi-component core granule with a final layer of a slowly dissolving gum such as guar gum. The physiologically optimal release rate or release delay is different for different vitamins and mineral supplements (see EP-A-93 114 762.3. For example the different said vitamins and/or mineral or nutrient substances are incorporated in the granules in a manner adapted to be released after different time delays or over different time spans.

Amongst the preferred organic polymers to be used are polyethylene glycols (PEG) or suitable homologues thereof, for example a polypropylene glycol (PPG) or a mixed or co-polymer of different glycols, e.g. polyethylene propylene glycol, more particularly polymers or mixed polymers of glycols having from 2 to 6 carbon atoms, preferably 2 to 4 carbon atoms. It will, however, be appreciated that other physiologically acceptable slightly water soluble, organic polymers may be used, for example, polyvinyl pyrrolidine (PVP), ethylcellulose, hydroxyethylcellulose, gelatine and shellac as well as certain natural products or derivatives thereof such as gelatine, malto-dextrins, pre-gelatinised maize starch, cellulose, etc., as herein described. These natural products or derivatives are preferred particularly for preparations intended as food or feed supplements rather than as pharmaceuticals.

Preferably, in the case of PEG, the molecular weight of the organic polymer used is between 2000 and 20 000, more preferably between 4000 and 10 000, for example 6000.

In addition, organic polymers such as acrylic polymers (e.g. Eudragit) used in the coating of pellets, granules or powders, or as components in the production of granules in the pharmaceutical industry may be used.

The granules may be coloured. It will be appreciated that any conventional non-toxic colourants may be used but the following are preferred: beta carotene, riboflavin, caramel, chlorophyll, cochineal, turmeric, lycopene, saffron, xanthrophyll, ferric oxide pigments, apocarotenal and canthaxanthine and/or annato plant extract. These are all natural substances and are therefore preferred. However, it is, of course, possible to include synthetic or artificial colourants. Such colourants may be incorporated into the multi-component granules as such or they may be separately applied as an outer layer on the final granules.

The granules may also optionally include a variety of natural substances which may be useful or desirable from the nutritional and/or economical points of view. Such natural products may either be plants, plant extracts, herbs or other natural products customarily used as food supplements. Such natural products usually contain nutrients (vitamins, minerals) in such low concentrations (e.g. brewer's yeast) that they are not as such particularly useful in the treatment or prevention of nutrient deficiencies since the quantities required would be prohibitive. However, by enriching such natural products with nutrients as herein provided for, a final product may be obtained which is superior to simple vitamin/mineral mixes due to the fact that natural products contain a very wide variety of additional nutrients, some of which may even be unidentified, (e.g. ginseng, gingko-biloba and many other herbs). Apart from the inherent acceptability to the health conscious public, the use of such natural substances as fillers, binders, coating agents etc., has important cost advantages. Further examples of natural products that have been used as ingredients or coatings of granules include brewer's yeast, rose hip powder, citrus or apple bioflavonoids, alfalfa powder, dried tomato powder, wheat germ powder and many other similar products.

In a preferred embodiment of the invention the preparation is presented in a granular shake-on form for direct sprinkling of the product over the food before consumption, preferably packaged in a dispenser, e.g. similar to a salt or condiment shaker. The product should have an adequately large granule size so as to impart slow release characteristics to the vitamins and minerals in the preparation. In addition it is useful to include a free flowing agent such as tricalcium phosphate in the preparation.

It is contemplated by the applicant that there may be separate vitamin and/or mineral preparations that may be mixed together in desired proportions according to specific needs. The same or different polymers and/or natural substances as herein outlined may be used in each individual preparation in order to impart more finely tunable characteristics to the final mixture. Also different concentrations of polymer or natural binder or coating in each preparation may be used to achieve this effect.

The granules may optionally include flavouring or flavour enhancing substances known per sé to be suitable for the contemplated field of application. For example, the flavouring may be specially adapted to specific types of dishes, e.g. soups, or gravies, e.g. gravies intended for use with maize porridge to mention but one example. These substances may be incorporated in the matrix of granules or in the coating. Also flavourings have been found particularly useful in the manufacture of supplements for animal use, for example granules for sprinkling over dog food.

In one embodiment of the invention the vitamin and/or minerals supplement substances or nutrients are granulated with the organic polymer or natural product serving as a carrier liberating the supplement substances or nutrients contained therein or thereon when exposed to a temperature above that of the average operating temperature of the human body when added to food before and/or during but preferably near the end of the cooking process in order to enrich the food, the preparation accordingly revitalising-vitalising the natural vitamin carrier sites in or on the food which may become leached of their vitamins during the cooking process. Preferably such a preparation releases such vitamins in a slow stream to those food components which are able to absorb those supplement substances in a form from which they will subsequently be released again gradually to the body after ingestion. Alternatively the granules are designed to survive the cooking process at least to a substantial degree to be released gradually on contact with the gastric juices. The vitamins in both types of product have been found to have superior stability properties.

According to a particular embodiment of the present invention, the vitamin and/or mineral preparation contains a carrier in the form of an organic polymer or natural product(s) as abovesaid, the carrier being adapted to release the vitamins and minerals at a retarded rate after ingestion. Accordingly, reduced quantities of vitamins and minerals may be necessary in order to fortify the food because the supplement substances are released at a rate adapted to the ability of the body to absorb the substances. The carrier may be adapted to slowly dissolve in certain solutions, as for example, may be found in the gastro-intestinal tract of a mammal, e.g. mildly alkaline solutions. Such carriers may be selected from a list of well known compounds having this property, e.g. gelatine or gelatine derivatives, casein or casein derivatives, starch, gums and other hydro-colloid gels.

According to another aspect of the invention, either organic polymers or a suitable natural product (e.g. guar gum) is used to coat granules prepared as above in order to introduce or enhance the slow releasing properties or other desirable properties to such granules.

One of the overriding principles on which the present invention is based is that of making available the supplement(s), i.e. vitamins and/or minerals to the body so gradually that the body can absorb these supplements with improved efficiency and efficacy and as nearly as possible mimicking ingestion as part of the actual diet. In this manner it is possible to optimise the cost effectiveness of supplementation, because of reduced dosage rates being sufficient for biological efficacy.

According to a further aspect to the present invention which is preferably combined with the abovedescribed features, there is provided a vitamin and/or mineral preparation in the form of a granulate, the preparation having, or having the potential to develop, a density of less than 1,0 g/ml. The purpose of this feature is to cause the granules to float in the stomach, preferably for the full duration of the gradual release of the active ingredient(s) to the gastric juices. This further effectively reduces the quantities of nutrients administered to achieve a particular blood level and therefore the cost.

In one embodiment of this aspect of the invention the preparation is granulated as hereinbefore described, the granules being selected to have a density of less than 1,0 g/ml.

In another embodiment to this aspect of the present invention the granulated vitamin and or mineral preparation includes a substance capable of rendering the granules buoyant in a liquid environment, for example the stomach juices. Preferably the polymer or matrix includes agents that may react with a surrounding environment to produce an inert gas within the matrix to cause bloating thereof resulting in the matrix becoming less dense. Thus the preparation may include the vitamins and/or minerals and a hydro-colloid or hydrophobic, preferably inactive carrier (for example magnesium stearate) to which small quantities of mineral carbonate (for example, sodium, potassium, calcium or magnesium carbonate or dolomite) and a suitable acid (e.g. citric acid) are added. In order to facilitate the process of granulation, varying quantities of a suitable non-lipid inert carriers (for example starch pre-gelatinised maize starch or cellulose) may also be added.

The additives referred to above or similar additives may also react with proton donor molecules (for example Hydrochloric acid (HCl)) to produce carbon dioxide ($CO_2$) gas within the matrix.

It is important that the matrix employed in this embodiment be resilient or pliable to the extent that a sufficient amount of gas generated is retained within the matrix in order to render the preparation or granule less dense than water, i.e. less dense than 1,0 g/ml. The buoyant properties of granules may also be enhanced by including in their composition sufficient quantities of hydrophobic material or materials such as certain food gums or lipids or certain forms of silicon dioxide ("aerosil") (trademark). Preferably such components have a density of less than 1g/ml. This is especially effective in the case of very small granules.

In a further embodiment to this aspect to the invention there is provided a vitamin and/or mineral or nutrient preparation mixed and combined with or attached to material which has a density substantially less than 1,0 g/ml in such amounts that the preparation has a net density of less than 1,0 g/ml. Thus, for example, such a vitamin and/or mineral mixture may be coated onto small buoyant spheres (microspheres) or primary granules the spheres or granules being preferably constructed from any suitable inert material with appropriate density.

Alternatively or in conjunction with the above, small spheres consisting of formaldehyde treated gelatine may be produced in a manner known in the art and coated with a concentrated aqueous solution of a vitamin and/or mineral supplements dissolved in a slow dissolving matrix. Accordingly, slow release characteristics may be imparted to the product.

According to yet a further aspect to the present invention there is provided a process for the production of a granular preparation as hereinbefore described including the steps of:

- formulating a mix of the vitamin and/or minerals to be administered,
- granulating the product with an organic polymer or macromolecular natural or natural substance-derived binder, coating, encapsulating or carrier substance,
- if required additionally coating the granules with the same or a different organic polymer or natural substance derived binder, coating, encapsulating or carrier substance,
- optionally containing one or more additional vitamin/mineral or nutrient ingredients, and
- drying the granules so formed.

The process may also include the additional step of adding a colourant or flavouring agent to the preparation at any stage of the process or by means of a separate coating.

The invention also provides a process for the production of a granulate preparation having a net density of less than 1,0 g/ml including the step of coating a buoyant body with a layer of vitamins and/or minerals as hereinbefore described. Preferably the solution of vitamins and/or minerals is a concentrated aqueous solution. Colouring and/or flavouring as hereinbefore described may be added to the buoyant article, to the vitamin and/or mineral preparation or both.

According to still another aspect of the present invention there is provided a dispenser facilitating the application of a vitamin and/or mineral granulate preparation, the dispenser having effected on it at least one formation allowing for an efflux or dispersion of the granulate from the dispenser. Preferably the dispenser is capable of being rendered airtight after opening. The dispenser may also include means for quantitatively dispensing a specified volume of granulate constituting a desired dosage unit, for example 1-3 grams.

The dispenser in which the preparation is packaged may be specifically adapted to sprinkle the preparation onto foodstuffs in a similar manner in which salt, pepper or other herbs are customarily sprinkled onto food. The dispenser may therefore be designed like a salt shaker, having a perforated, preferably removable top with apertures of suitable size in relation to the size of the granules. The mode of application of vitamins and minerals in this manner has unexpected practical advantages including that of ease of administration to users who may be reluctant to swallow tablets or capsules (e.g. children, adults). Thus the mode of application in this manner becomes an important aspect of the invention.

According to another aspect to the present invention there is provided a method of fortifying food, the method including the step of adding a vitamin and/or mineral supplement as hereinbefore described in shake-on form to the food. The supplement is preferably added to the food by means of a dispenser as hereinbefore described. The supplement may be added to the food before, after and/or during the cooking process.

According to a further aspect to the present invention there is provided a method of preparing vitamin and/or mineral granules in the presence of a suitable polymer or natural product, the method including the step of spray drying the granules. Depending on the desired properties of the granules (size, colour, taste, hardness, dissolution rate, etc.) many variations of the process are possible.

Generally the conditions that favour the production of granules during the spray drying are selected. These are known per sé in the art. Both nozzle type and rotor type of spray driers may be used, critical variables (which are adjusted in a manner known to those skilled in the art) being rotor speed, nozzle type, speed of feed, inlet temperature (e.g. 120°C) and outlet temperature (e.g. 70-80°C) and dimensions of the tower. In addition, certain products may be added to the slurry before spray drying that may enhance the formation of granules. These include pre-gelatinised maize starch, starch derivatives (e.g. Capsul), molasses, malto-dextrins, certain fats, cellulose and derivatives, caseinates etc. Generally such additives are added in the concentration range of 1-20%, depending on the compounds used. After spray drying, the granules may be coated in the usual manner with a suitable organic polymer or preferably, with a natural product such as guar gum or gum acacia (1-2% solution) or other product with similar properties in order to impart retarded release characteristics to the final granules.

In the basic process, a vitamin and/or mineral premix is dissolved in a solution or slurry of a suitable filler material (for example, cellulose, starch, corn starch hydrolyzates e.g Alidex-30, pre-gelatinised maize etc.). The preferred concentration is such that the final mix before spray drying contains approximately 40-55% solids. At this stage the chosen carrier, for example (polyvinyl pyrrolidone) PVP or one of the poly-methyl acrylates, Shellac etc. or a suitable natural product such as pre-gelatinised maize starch, malto-dextrins, gelatine etc., is added to the mix, the preferred concentration being such that the final mix will contain 0,1 to 20%, preferably 0,5 to 10%, e.g. 2% of the carrier depending on the nature of the carrier.

According to yet a further aspect of the invention, there is provided a method for preparing vitamin and/or mineral granules in the presence of a polymer and/or suitable natural product, the method including the step of agglomeration in the preparation of such granules. Depending on the desired properties, many variations of this process are possible including that of multi-layered agglomeration as described above. Generally the conditions for agglomeration are chosen so that the resulting granules have suitable properties (mechanical strength, retarded dissolution, stability, etc.). This is essentially achieved as described above.

In addition to the above processes, other wet or dry granulation procedures may be used in a similar fashion. In practice, and especially because of economical considerations, the process of agglomeration is a preferred procedure for the purposes of the present invention.

Flavours and/or colouring agents (for example Beta-carotene) may be added before, during or after the various stages in the different procedures described above.

Additional desirable properties (taste, stability etc.) may also be imparted to the end product by adding a protein source (for example skimmed milk powder or soya protein isolate or soya flour) and/or a vegetable fat emulsion. These may be added at a level of 0,1 to 30% of the final product. The preferred range is 1 to 10%, for example 2%. The vegetable fat used may also consist of a mixture of oils, for example 40% corn oil with 60% cocoa nut oil.

It has been found useful to add a free flowing agent to the final granules to improve the physical properties and to ensure optimum delivery when the product is sprinkled over food by means of a shake-on container. A typical free flowing agent is calcium phosphate but various other commercial agents may be used, for example "Sipernate" or "Alusol" (trademarks). The free flowing agent is usually added to the final product in an amount of 0,05 to 1%, for example 0,1 to 0,5%, for example 0,2%.

According to one embodiment of this aspect to the invention, the final granules are covered with a layer of lecithin in the usual manner such that the final product contains 0,1 to 1% lecithin, for example 0,5%. In addition, the granules may be finally covered with a layer of a slowly dissolving gum such as gum acacia or guar gum (1-2% solution) as herein described. The latter is a preferred procedure.

In addition, and in order to stabilise the vitamins during the spray drying processes used, agglomeration or other granulation stabilisers and/or anti-oxidants are added to the slurry or solution or dry mix before spraying or agglomeration. Typical examples are tocopherol, BHT or BHA (Butylated Hydroxy Toluene and Butylated Hydroxy Anisole). These are used at a level of 0,01 to 1%, depending on the conditions of spray drying or agglomeration.

The final product is preferably dried to a moisture content of between 1 and 3%, preferably 2%.

The final granulated product is preferably subject to rigorous quality control steps which may include any one or more of the following, for example, under conditions of accelerated aging:

- vitamin assays (e.g. folate, vitamin B6)
- check on free flowing properties,
- moisture content (for example 2%),
- hydroscopic properties,
- colour,
- bulk density,
- total bacterial plate count,
- taste.

Although the invention is herein described primarily in the context of multi-vitamin and mineral supplements, it will be understood that the novel features taught by the invention can also be applied within the scope of the invention to single-vitamin supplements.

The scope of the invention is also intended to include the novel method of administration of vitamin and/or mineral supplements herein disclosed.

It will be understood that the novel inventive features herein described may be employed separately in a variety of combinations, each contributing to the benefits aimed at.

The invention will now be described with reference to the following non-limiting examples partly with reference to the drawings. In the following, the vitamins are listed in order of importance and ranges of milligrammes per day are based on grams granulate per day.

| | |
|---|---|
| Figure 1 | A shows a cross-sectional side view of one embodiment of a dispenser according to the invention allowing for quantitative dispensing of a specified volume or desired dosage unit of food or feed supplement according to the invention (vitamin and/or mineral or nutrient granulate preparation) in its closed condition; |
| Figure 1B | shows a similar view of the dispenser of Fig. 1A in its open dispensing position; |
| Figure 2 | shows a top view of another embodiment of a dispenser according to the invention allowing for the supplement to be sprinkled from the dispenser; and |
| Figure 3 | shows a cross section along the line III-III of the dispenser shown in Figure 2 (not to the same scale). |

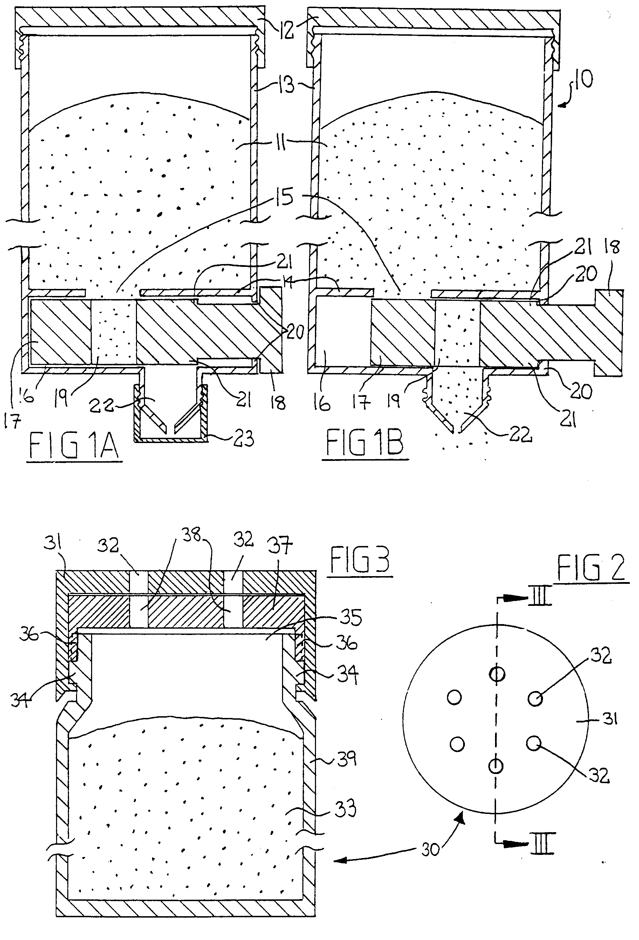

In Figures 1A and 1B the dispenser 10 which contains the food supplement 11 includes a screw on lid 12 which is screwed onto the storage portion 13 of the dispenser 10. In the floor 14 of the storage portion 13 an aperture 15 is provided which opens into a tubular measure chamber 16 below the storage portion 13 of the dispenser 10. Reciprocally slidably contained within the measure chamber portion 16 is a plunger 17 including a handle 18 and a cavity 19 of specified volume constituting the desired dosage unit. The plunger 17 includes a shoulder 21 followed by a stem of smaller cross section passing through a matching aperture coaxial with and at the end of the measure chamber 16, defined by a restraining collar 16, to the handle 18. Located in the underside of the dispenser 10 and the dispensing chamber 16, offset in relation to the aperture 15 is an aperture leading into a nozzle 22 allowing for the discharge of the supplement 11 from the cavity 19 when juxtaposed with the nozzle 22. In Figure 1A the nozzle 22 is closed by a screw cap lid 23. Both the screw cap nozzle lid 23 and the screw on lid 12 for the dispenser 10 render the dispenser 10 air tight when both are fully screwed into place, optionally assisted by sealing washers (not shown).

In Figure 1A the plunger 17 is fully inserted into the tubular portion 16 of the dispenser 10. The plunger 17 is so dimensioned that when fully inserted into the measure chamber 16, the handle 18 lies against the collar 20 of the dispenser 10. In such a position, the cavity 19 the plunger 17 is aligned with the aperture 15 in the floor 14 of the storage portion 13 of the dispenser 10 thereby allowing a predetermined volume of supplement 11 to drop from the storage portion 13 into the cavity 19.

Referring now to Figure 1B, the dispensing the plunger 17 is displaced axially in the measure chamber 16 and outwardly by means of the handle 18 from the tubular portion 16 of the dispenser 10 to its maximum extent determined by the shoulder 21 abutting with the collar 20 which limits the extent to which the plunger 17 may be withdrawn from the measure chamber 16. In this position the cavity 19 of specified volume in the plunger 17 is aligned with the nozzle 22 allowing for the supplement 11 to be discharged from the cavity 19, and sprinkled onto food (not shown) through the nozzle 22 provided the screw cap 23 is removed. Supplement 11 is prevented from falling from the storage portion 13 through the aperture 15 by the aperture 15 being blocked by a portion of the plunger 17.

It will be appreciated that the embodiment shown is non-limiting in that the discharge of a specified volume of supplement constituting a desired dosage unit from the dispenser may be effected in other ways, for example, instead of having a reciprocal plunger, there may be included in the dispenser an alternative measure device including a cavity of specified volume which is capable of being aligned by rotation successively with both an aperture in the bottom of the storage portion 13 and a discharge and sprinkling nozzle. Rotation may be about an axis normal to the bottom 14 or parallel thereto.

Referring now to Figs. 2 and 3 the dispenser 30 includes a top lid 31 including perforations 32 of suitable size in relation to the granules of the food supplement 33 contained within the dispenser 31 so as to permit their being sprinkled onto food (not shown) from the dispenser 30, for example, not unlike salt or condiment from a salt or condiment shaker.

In Figure 3 the dispenser 30 includes a storage portion 39, a first top lid 31 having perforations 32 and a second, inner lid 37 also including perforations 38. The storage portion 39 of the dispenser 30 contains the supplement 33. A lip 35 of the storage portion 39 of the dispenser 30 includes a flange 34 which movably retains the first top lid 31 in relation to the storage portion 39. The lip 35 of the storage portion 39 includes a second serrated flange 36 which interacts with a complementarily shaped portion of the second inner lid 37 thereby substantially immovably retaining the second lid 37 on the lip 35 of the storage portion 39 of the dispenser 30 when the first top lid 31 is in place.

The first top lid 31 is rotatable about the lip 35 of the storage portion 39 of the dispenser 30 and thus also rotatable relative to the second inner lid 37. The perforations 32 of the first top lid 31 can be moved either into co-alignment with the perforations 38 of the second, inner lid 37 to thereby permit supplement 33 contained within the dispenser 30 to be sprinkled from the dispenser 30 in a similar manner in which, salt, pepper or other herbs are customarily sprinkled onto food. Alternatively, the first top lid 31, can be rotated relative to the second inner lid so that the their perforations 32 and 38 are no longer aligned and no supplement 33 can be shaken from the dispenser 30. When the perforations 32 and 38 are not in alignment, the dispenser 30 is rendered substantially air tight to prevent degradation of the supplement 33 housed within.

### Example 1

Procedure for the production of basic granules by means of the process of agglomeration.

A standard mineral mix (SMM) was prepared by mixing and finely grinding the following:

| | |
|---|---|
| Manganese glycerophosphate | 12,3 g |
| Copper sulphate .5H$_2$O | 1,96 g |
| Sodium selenite | 0,167 g |
| Zinc gluconate | 69,70 g |
| Iron fumarate | 15,2 g |
| Sodium molybdate | 0,25 g |
| Potassium iodide | 0,131 g |
| Chromium trichloride | 0,15 g |
| Magnesium carbonate | <u>200,14 g</u> |
| | 300 g |

A standard vitamin mix (SVM) was prepared by mixing and finely grinding the following:-

| | |
|---|---|
| Thiamine nitrate | 1,22 g |
| Vitamin E (50% CWS, Roche) | 16,0 g |
| Vitamin A acetate (500,000 IU/g) | 1,6 g |
| Ca pantothenate | 6,0 g |
| Pyridoxine HCl | 2,43 g |
| Riboflavin | 1,50 g |
| Vitamin D3 | 0,0025 g |
| Biotin | 0,2 g |
| Cyanocobalamin | 0,002 g |
| Niacinamide | 15,0 g |
| Beta carotene | 3,0 g |
| Folic acid | 0,3 g |
| Magnesium carbonate | <u>154,75 g</u> |
| | 200 g |

A **basic mix** for agglomeration was then prepared as follows:-

| | |
|---|---|
| SVM | 200 g |
| SMM | 300 g |
| Ascorbic acid | 50 g |
| Magnesium carbonate | 100 g |
| Dolomite | 100 g |
| Soya protein isolate | 250 g |
| Rose hip powder | 100 g |
| Citrus bioflavonoids | 100 g |
| | <u>1200g</u> |

The following mixture was prepared for agglomeration:-

| | |
|---|---|
| Basic mix | 150 g |
| Pre-gelatinised maize | 100 g |

The mixture was agglomerated using a solution containing 25 g molasses and 2,5 g of guar gum per 250 ml. Air temperature 110°C

After drying the granules obtained were crushed and sieved in the usual manner to produce uniform granules (average diameter 500μ).

Alternatively, proceed as follows:-

| Basic mix | 30 kg |
|---|---|
| Sucrose | 1,67 kg |
| Pre-digested maize starch | 18,33 kg |

Granulate in an agglomerator using a 4 % aqueous solution of gelatine.

## Example 2

Granules with increased mechanical strength.
Proceed as in Example 1, but use the following mixture for agglomeration:-

| Basic mix | 150 g |
|---|---|
| Pre-gelatinised maize starch | 80 g |
| Malto-dextrins ("capsul") | 15 g |
| Guar gum | 5 g |

Agglomerate in the usual manner using a solution containing 25 g of molasses plus 2,5 g of guar gum per 250 ml. Grind and sieve particles to desired size.

## Example 3

Flavoured granules

Proceed as in Example 1
The final granules are flavoured in an agglomerator by spraying with solution (5-20 %) of various flavouring agents (e.g. orange, caramel, savoury, etc.).

## Example 4

Granules with enhanced retarded release properties.
Prepare granules as in Example 1. Then, in an agglomerator, spray the granules with a 2 % solution of guar gum using approximately 100 - 200 ml solution per 250 g of granules. Dry in the usual manner.

## Example 5

For the preparation of layered granules.

Core granules:

Prepare a "core" mixture containing unstable vitamins and minerals and vitamins that could impart an unpleasant taste to the final product:

| | |
|---|---|
| Thiamine nitrate | 1.22 g |
| Vitamin A acetate | 1,6 g |
| Ca pantothenate | 6,0 g |
| Pyridoxine HCl | 2,43 g |
| Riboflavin | 1,50 g |
| Vitamin $D_3$ | 0,0025 g |
| Beta-carotene | 3,0 g |
| Folic acid | 0,3 g |
| Zinc gliconate | 46,4 g |
| Manganese glycerophosphate | 8,18 g |
| | $\overline{70,64 \text{ g}}$ |

Prepare a basic mix containing:-

| | |
|---|---|
| Core mixture | 70,64 g |
| Ascorbic acid | 50 g |
| Magnesium carbonate | 100 g |
| Dolomite | 100 g |
| Soya protein isolate | 250 g |
| Rose hip powder | 100 g |
| | $\overline{680,6 \text{ g}}$ |

The following mixture was prepared for agglomeration:-

| | |
|---|---|
| Basic mix | 85,1g |
| Pre-gelatinised maize | 150 g |
| Starch | 14,9g |

To produce the core granules, the mixture was agglomerated using a solution of 25 g of molasses and 2,5 g of guar gum per 250 ml (air temperature 110°C).

The core granules were then sprayed in an agglomerator with a solution containing stable vitamins and soluble minerals as follows:-

Dissolve the following in 100 ml of water:

| Copper sulphate 5$H_2$O | 1,96 g |
|---|---|
| Sodium selenite | 0,167 g |
| Iron fumarate | 15,2 g |
| Sodium molybddate | 0,25 g |
| Potassium iodide | 0,131 g |
| Chromium trichloride | 0,15 g |
| | 17,86 g |

Use 50 ml of this solution to spray onto 250 g of core granules in an agglomerator.

The final product (ca. 260 g) was then again sprayed in an agglomerator with 50 ml of a 50 % solution of pre-gelatinised maize in water or 50 ml of a solution containing 0,5 g of guar gum.

The final product is dried in the usual manner.

## EXAMPLE 6

A dry mix of the following powdered ingredients was made for the preparation of 1000 daily doses:

| Beta-carotene | 3,0 g (40 mg Betatab 75, Roche) |
|---|---|
| Vitamin E | 30,0 g (60 g 50% CWS, Roche) |
| Ascorbic acid | 100,0 g |
| Thiamine nitrate | 5,0 g |
| Riboflavin phosphate | 1,0 g |
| Niacin | 10,0 g |
| Pyridoxine.HCl | 5,0 g |
| Folic acid | 0,4 g |
| Ca-pantothenate | 5,0 g |
| Magnesium carbonate | 208,3 g (50 g Mg) |
| Zinc sulphate | 18,3 g (7,5 g Zn) |
| Magnesium sulphate | 10,0 g (3,25 g Mn) |
| Copper sulphate | 2,0 g (0,51 g Cu) |
| Sodium selenite | 0,11 g (0,05 g Se) |
| Dridex 20($^*$) | 2000,0 g |
| Dolomite | 500,0 g |
| | 2898,11 g |

($^*$ = a glucose polymer or malto-dextrin)

The mixture was granulated in the usual manner using a 10% solution of PVP (polyvinyl propylene) in alcohol in a fluid bed granulator. The granules were dried and packed in 300 g containers containing removable perforated lids. One daily dose (2,5 - 3,0 g) was administered to food immediately before consumption by shaking the mixture evenly on to the food (porridge, soup, mashed potatoes, boiled vegetables, pasta, meat, fish etc.) three times daily with normal meals. By using the mixture with each of 2 or 3 meals, the quantity ingested per meal is reduced and the overall long acting effect of the product enhanced. Taste is also improved.

The shake-on mode of application is particularly useful in fortifying sandwiches and buttered rolls by shaking it on to one or both sides of the sandwich or roll slices.

Alternatively, half a teaspoonful per person of the product can be sprinkled over food in divided doses over several meals daily or with the main meal.

The product can also be added to food during the process of preparation, for example when making soup. In this case it is advisable to add the vitamin mixture towards the end of the cooking process in order to minimise the exposure time to heat and air. Thus 2 level teaspoonsful of the product would be added shortly before serving to a portion of soup for 4 persons.

The product can similarly be used to fortify other foods during the process of cooking.

## EXAMPLE 7

Differently coloured granules are prepared by granulating the powdered mix described in example 1 after addition of the following colourants: (quantities per mix of 2898 g as described in example 1) beta carotene, riboflavin, caramel, chlorophyll, cochineal, turmeric, lycopene, saffron, xanthrophyll, ferric oxide pigments, apocarotenal and canthaxanthine.

The colourants are either added to the dry mix, or preferably dissolved in a minimum quantity of water or alcohol and sprayed on to the powdered vitamin/mineral mix before granulation and then dried. Alternatively, the colourant is dissolved in the granulating solutions (e.g. a 10% solution of PVP in alcohol).

## EXAMPLE 8

Preparation of granules with retarded release characteristics.
Per 1000 g of dry vitamin/mineral mix, add 100 g of finely ground methylacrylate powder. Mix well and then proceed to granulate with a 10% solution of PVP in alcohol.

## EXAMPLE 9

Preparation of buoyant granules.
2898 g of dry vitamin/mineral mix (prepared as described in example 1) is dissolved in 20/ of a 2 % solution of hydrocolloid material (e.g. gelatine) in water. Add 500g of sodium bicarbonate and 500 g of calcium carbonate to the solution and then evaporate in a rotating drum evaporator until semi solid. further dry in the usual manner and finally grind the dried material to a fine powder. Granulate with alcohol or 80% glucose solution.

**Example 10**

Shake-on vitamin-mineral granules for use on infant foods. (see EP-A-93 114 765.6)
One daily dose (1 g) contains the following:

| | |
|---|---|
| Ca-d-pantothenate | 3.0 mg |
| Pyridoxal (as hydrochloride) | 0.10 mg |
| Pyridoxine (as hydrochloride) | 0.05 mg |
| Riboflavin (as phosphate sodium) | 0.10 mg |
| Ascorbic acid | 25 mg |
| Vit. E (d-alpha-tocopherol acetate) | 2.0 mg |
| Folic acid | 0.02 mg |
| Cyanocobalamin | 0.005 mg |
| Zinc (as zinc citrate) | 2.0 mg |
| Selenium (as yeast complex) | 0.005 mg |
| Magnesium (as basic carbonate) | 20 mg |
| Iodide (as sodium iodide) | 0.02 mg |
| Iron (as fumarate) | 2.0 mg |
| Niacin | 2.0 mg |
| Thiamine | 1.0 mg |
| Vitamin D (cholecalciferol) | 0.003 mg |
| Flavouring (vanilla) | 20 mg |
| Dridex-20 | q.s. |
| | 1000 mg |

Granules are prepared in the usual manner using a solution of PVP as previously described (Example 6).One daily dose consists of 1 g (approximately 1/2 teaspoonful of the granules). The granules are sprinkled on to the food immediately before use either by using a shake on sprinkler or by measuring off 1/2 teaspoonful. The total daily dose should be divided over 3 or more meals.

Alternatively, granules are prepared in an agglomerator by spraying with a 4% solution of gelatine or with a solution containing 25 g of molasses and 2,5 g of guar gum per 250 ml as described in Examples.

**Example 11**

Shake-on vitamin-mineral granules for use in children 3 - 10 years.
One daily dose (1g) contains the following:

| | |
|---|---|
| Ca-d-panthothenate | 5.0 mg |
| Pyridoxine (as hydrochloride) | 3.0 mg |
| Vitamin D (cholecalciferol) | 0.005 mg |
| Vit E (d-L-tocopherolacetate) | 4.0 mg |
| Ascorbic Acid | 30 mg |
| Thiamine | 1,0 mg |
| Riboflavin | 1.0 mg |
| Niacin | 10 mg |
| Folic acid | 0.2 mg |
| Vit B12 | 0.003 mg |
| Magnesium (as basic carbonate) | 50 mg |
| Iron (as fumarate) | 5 mg |
| Zinc (as gluconate) | 10 mg |
| Iodide (as sodium iodide) | 0.1 mg |
| Flavouring (vanilla) | 30 mg |
| Dridex-20 | q.s. |
| | 1000 mg |

Granules are prepared in the usual manner using a solution of PVP as previously described (Example 6) or alternatively (as described in Example 10) using gelatine or molasses/guar gum for granulation in an agglomerator. One daily dose consists of 1 g (approximately 1/2 teaspoonful). The granules are sprinkled on to food (e.g. porridge) immediately before use as described in Example 5. One half a teaspoonful of the granules may also be added to food during preparation e.g. to porridge while it is being cooked. It is preferred to administer the daily dose (1/2 teaspoonful) in divided doses over 3 or more meals.

**Example 12**

Shake on vitamin-mineral granules for use in the elderly and in severely ill patients. One daily dose (1 g) contains the following:

| | |
|---|---|
| Chromium (as yeast complex) | 0.1 mg |
| Ca-d-pantothenate | 10.0 mg |
| B-carotene | 3.0 mg |
| Vit. E (d-L-tocopherol) | 50.0 mg |
| Vitamin D (cholecalciferol) | 0.005mg |
| Vitamin A | 3330 IU (1 mg) |
| Vitamin C | 100.0mg |
| Thiamine | 2.0 mg |
| Riboflavin (as phosphate sodium) | 2.0 mg |
| Niacin | 50.0 mg |
| Pyridoxine (as hydrochloride) | 6.0 mg |
| Folic Acid | 0.8 mg |
| Vitamin B12 | 0.01 mg |
| Magnesium (as basic carbonate) | 100.0mg |
| Zinc (as gluconate) | 10.0 mg |
| Iron (as fumarate) | 10.0 mg |
| Iodide (as sod. iodide) | 0.15 mg |
| Selenium (yeast complex) | 0.1 mg |
| Flavouring (e.g vanilla) | 30.0 mg |
| Dridex-20 | q.s. |
| | $\overline{1000}$ mg |

Prepared as described in Examples 1 and 6.

## Example 13

Preferred quantities of nutrients for adults. The shake on vitamin and mineral granules (quantities per 1 g of final product or approximately 1/2 teaspoonful).

| Nutrient | Preferred Range (mg) | More Preferred (mg) | Example (mg) |
|---|---|---|---|
| Vitamin A | 500-30000 | 1000-10000 | 5000 |
| Vitamin D (Cholecalciferal) | | 1-20μg | 3-12μg5μg |
| Vitamin E (d-L-tocopherol) | | 10-1600 | 100-600400 |
| Vitamin C | 30-10000 | 1000-6000 | 2000 |
| Thiamine | 0,5-50 | 1-20 | 2 |
| Riboflavin | 0,5-10 | 1-5 | 2 |
| Niacin | 5-500 | 10-100 | 50 |
| Pyridoxine | 2-50 | 5-30 | 10 |
| Folic Acid | 0,02-10 | 0,1-5 | 1 |
| Vitamin B12 | 0,002-0,5 | 0,02-0,2 | 0,1 |
| Calcium | 100-1500 | 300-1200 | 600 |
| Magnesium | 50-600 | 100-500 | 300 |
| Iron | 2-50 | 5-20 | 10 |
| Zinc | 5-50 | 10-30 | 20 |
| Iodide | 0,02-0,2 | 0,05-0,15 | 0,1 |
| Ca-d-pantothenate | 1-30 | 5-20 | 10 |
| Copper | 0,1-5 | 0,2-4 | 2 |
| Manganese | 2-12 | 3-10 | 5 |
| Chromium | 0,02-0,4 | 0,05-0,3 | 0,2 |
| Selenium | 0,02-0,4 | 0,05-0,3 | 0,2 |

Prepared as described in Examples 1 and 6.

## Example 14

Shake on vitamin-mineral granules for use in dogs.
One daily dose for a large dog (20 - 40 kg) is 1 g or 1/2 teaspoonful.

One daily dose (1g) contains:

| | |
|---|---|
| Thiamine | 0,4 mg |
| Riboflavin | 1.0 mg |
| Pyridoxine (as hydrochloride) | 5.0 mg |
| Niacin | 5.0 mg |
| Ca-d-pantothenate | 1.0 mg |
| Vitamin A | 333 IU (0,1 mg) |
| Vitamin D | 300 IU (0,006 mg) |
| Vitamin E (L-d-tocopherol) | 5.0 mg |
| Calcium (as carbonate) | 100.0 mg |
| Magnesium (as basic carbonate) | 100.0 mg |
| Zinc (as gluconate) | 5.0 mg |
| Flavour enhancer (e.g. dried meat powder) | 500 mg |
| Dridex-20 | q.s. |
| | 1000 mg |

Prepared as in Examples 1 and 6.

## Example 15

Shake-on vitamin-mineral granules for cats.
One daily dose (1g = 1/2 teaspoonful) contains:

| | |
|---|---|
| Ca-d-pantothenate | 1,0 mg |
| Thiamine | 0,2 mg |
| Riboflavin | 0,3 mg |
| Pyridoxine (as hydrochloride) | 1,0 mg |
| Niacin | 2,0 mg |
| Vitamin A | 100 IU (0,03 mg) |
| Vitamin D | 100 IU (0,002 mg) |
| Vitamin E (d-L-tocopherol) | 1,0 mg |
| Calcium (as carbonate) | 50,0 mg |
| Magnesium (as basic carbonate) | 30,0 mg |
| Zinc (as gluconate) | 2,0 mg |
| Flavour enhancer e.g. dried meat powder | 700,0 mg |
| Dridex-20 | q.s. |
| | 1000 mg |

Prepared as in Examples 1 and 6.

## Example 16

Shake-on vitamin-mineral granules for use as a pregnancy supplement.
One daily dose (1g) contains:

| | |
|---|---|
| B-carotene | 5,0 mg |
| Vitamin D3 | 0,0025 mg |
| Thiamine | 5,0 mg |
| Riboflavin | 5,0 mg |
| Pyridoxine (as hydrochloride) | 10,0 mg |
| Niacin | 20,0 mg |
| Vitamin B12 | 0,01 mg |
| Vitamin C | 100,0 mg |
| Folic acid | 0,8 mg |
| Vitamin E (d-L-tocopherol) | 30,0 mg |
| Calcium (as carbonate) | 100,0 mg |
| Magnesium (as basic carbonate) | 100,0 mg |
| Iron (as fumarate) | 30,0 mg |
| Iodide (as sod. iodide) | 0,1 mg |
| Zinc (as gluconate) | 20,0 mg |
| Copper (as sulfate) | 1,0 mg |
| Vitamin A | 3330 IU (1,0mg) |
| Flavouring | 50,0 mg |
| Dridex-20 | q.s. |
| | $\overline{1000}$ mg |

Prepared as in Examples 1 and 6.

## Example 17

Preparation of vitamins/mineral granules by means of spray drying.

A pre-mix of vitamins and minerals containing the following relative proportions was prepared.

| | |
|---|---|
| Vitamin A acetate | 1000 IU |
| Beta-carotene | 3,0 mg |
| Vitamin E | 15,0 mg |
| Ascorbic acid | 50,0 mg |
| Thiamine nitrate | 3,0 mg |
| Riboflavine | 1,0 mg |
| Nicotinamide | 10,0 mg |
| Pyridoxine-HCl | 5,0 mg |
| Folic acid | 0,4 mg |
| Calcium d-pantothenate | 5,0 mg |
| Magnesium carbonate pond | 300,0 mg |
| Zinc sulphate 7H20 | 44,0 mg |
| Manganese sulphate .H20 | 10,0 mg |
| Copper sulphate .SH20 | 2,0 mg |
| Sodium selenite | 0,17 mg |

120 kg of Alidex-30 (glucose polymer) containing 90kg of solids were dissolved in and diluted with 78 litres of water. Fifteen kg of premix powder (prepared as above) and flavour (1kg) and a suitable polymer (1 kg of polymethacrylate, Eudragit) added as a slurry. The resulting suspension was spray dried under the usual conditions using suitable nozzles for the preparation of fine granules.

200g of a free flowing agent ("Supernate" (trademark) or calcium phosphate) was added to the end product.

Varying properties can be imparted to the final product by adding one or more of the following to the slurry before spray drying.

(a) Skim milk powder 3-5 kg
(b) Homogenised vegetable fat e.g. a mixture of
    40% corn oil
    60% coconut oil, or
    100% corn oil.
Quantities used were 5-10 kg per batch as above.
(c) Lecithin 5 kg.

Further variations may be imparted by spraying a solution of lecithin or polymer on to the granulated particles after spray drying.

It will be appreciated that the inventive principle claimed is not limited to the embodiment shown and that other embodiments may achieve the same result. For example, the second inner lid may be integral, ie form a wall of the container portion of the dispenser. Alternatively, the second inner lid may be movably contained within the top lid to form one unit.

The claims which follow constitute an integral part of the present disclosure.

## Claims

1. A food or feed supplement comprising vitamin or vitamins and/or mineral or nutrient supplement substances, characterised in that it is presented granulated and/or microencapsulated with an organic polymer, or macromolecular natural or natural substance-derived binder, coating, encapsulating or carrier substance imparting delayed or gradual release properties to the preparation in respect of vitamins and/or mineral or nutrient supplement substances, the granulate being in a free-flowing form adapted for adding it to food or feed prior to ingestion, and in a particle size distribution sufficiently fine and/or of a character to provide an acceptable texture in the mouth when ingested together with food.

2. A supplement as claimed in claim 1, characterised in that it is granulated and/or microencapsulated with a macromolecular natural or natural substance-derived binder, coating or encapsulating substance, more particularly that the macromolecular natural or natural substance-derived binder, coating, encapsulating or carrier substance is selected from the group consisting of food gums, guar gum, gum arabic, acacia gum, malto-dextrins, starch, pre-gelatinised gelatine, gelatine derivatives, agar, agarose, agaropectin, casein, casein derivatives, natural substance derived hydro-colloid gels, fatty or waxy substances, lecithin, edible polysacharides and mixture of more than one of these and preferably containing in addition to a binder, coating or encapsulating substance, one or more food compatible natural substances selected from the group consisting of herbs and derivatives of herbs, natural foods, fractions of foods or food extracts, molasses, concentrated citrus or apple or other fruit bioflavonoids, brewer's yeast, kelp, rose hip powder, soya flour, soya isolates, alfalfa powder, dried tomato powder, wheat germ powder.

3. A supplement as claimed in claim 1 or 2, characterised in that it is composed of granules from 2 microns to about 4 millimetres in diameter, preferably from about 10 microns to about 3 millimetres in diameter, more preferably from about 20 microns to about 2 millimetres in diameter.

4. A supplement as claimed in any one or more of claims 1 to 7, characterised in that a plurality of vitamins and/or mineral or nutrient substances are provided separately from one another in different granules and/or different parts of granules, for example in that different of said vitamins and/or mineral or nutrient substances are provided separately in the core and in one or more coatings respectively or in different successive coatings of the granules, and wherein optionally the different said vitamins and/or mineral or nutrient substances are incorporated in the granules in a manner adapted to be released after different time delays or over different time spans.

5. A supplement as claimed in any one or more of claims 1 to 4, characterised by being adapted for direct sprinkling of the product over food or feed before ingestion, preferably by being packaged in a dispenser adapted for direct sprinkling of the product over food or feed before ingestion, for example wherein the dispenser is of the nature of a salt or condiment shaker having one or more dispensing apertures of a size adapted to the particle size(s) of the granules, and wherein optionally the dispenser includes a means for quantitatively measuring and dispensing a specified volume of granulate constituting a desired dosage unit.

6. A supplement as claimed in any one or more of claims 1 to 5, characterised by the preparation having, or being adapted to develop, a density of less than 1,0 g/ml to cause the granules to float in the stomach, and which preferably includes a substance capable of rendering the granules buoyant in a liquid environment or wherein the vitamin and/or mineral or nutrient preparation is mixed and combined with or attached to material which has a density substantially less than 1,0 g/ml in such relative amounts that the preparation has a net density of less than 1,0 g/ml.

7. A food or feed supplement comprising vitamin or vitamins and/or mineral supplement substances, characterised in that it is granulated and/or micro encapsulated with an organic polymer, or macromolecular natural or natural substance-derived binder, coating, encapsulating or carrier substance imparting delayed or gradual release properties to the preparation in respect of vitamins and/or mineral supplement substances or nutrients and presented in a free-flowing form adapted for adding the granulate to food or feed prior to ingestion, packaged in a dispenser of the nature of a salt or condiment shaker having one or more dispensing apertures of a size adapted to the particle size(s) of the granules.

8. A supplement as claimed in claim 7, characterised by being granulated and/or microencapsulated with a macromolecular natural or natural substance-derived binder, coating, encapsulating or carrier substance.

9. A supplement as claimed in any one or more of claims 1 to 8, characterised in that the vitamin and/or minerals supplement substances or nutrients are granulated with the organic polymer or natural product serving as a carrier liberating the supplement substances or nutrients contained therein or thereon when exposed to a temperature above that of the average operating temperature of the human body when added to food before and/or during but preferably near the end of the cooking process in order to enrich the food.

10. The use of a feed or food supplement as claimed in any one or more of claims 1 to 9 for enriching a foodstuff or animal feed.

**11.** A use as claimed in claim 20, characterised in that the supplement is sprinkled onto the feed or foodstuff or feed prior to ingestion, preferably in that the supplement is so sprinkled from a packaging container wherein the supplement is packaged and which is designed substantially in the manner of a salt or condiment shaker.

**12.** A use as claimed in any one of claims 10 to 11, characterised in that the supplement is added to the foodstuff or feed at a suitable stage of a cooking process.

**13.** A method of preparing a feed or food supplement as claimed in any one of claims 1 to 9, including the steps of:

- formulating a mix of the vitamin and/or minerals to be administered,
- granulating the product with an organic polymer or macromolecular natural or natural substance-derived binder, coating, encapsulating or carrier substance,
- if required additionally coating the granules with the same or a different organic polymer or natural substance derived binder, coating, encapsulating or carrier substance,
- optionally containing one or more additional vitamin/mineral or nutrient ingredients, and
- drying the granules so formed, and wherein preferably the granules are packaged in a dispenser of the nature of a salt or condiment shaker having one or more dispensing apertures of a size adapted to the particle size(s) of the granules.

FIG 1A

FIG 1B

FIG3

FIG 2